# EUROPÄISCHE PATENTSCHRIFT

(11) **EP 2 881 377 B1**
(45) Veröffentlichungstag und Bekanntmachung des Hinweises auf die Patenterteilung: **12.02.2020**
(21) Anmeldenummer: 14193698.9
(22) Anmeldetag: 18.11.2014
(51) Int. Cl.: C04B 7/36

(54) **Verfahren zur Herstellung von Zementklinker**
Method for producing cement clinker
Procédé destinés à la fabrication de clinker

(30) Priorität: 07.12.2013 DE 102013020722
(43) Veröffentlichungstag der Anmeldung: 10.06.2015
(73) Patentinhaber: Messer Austria GmbH, 2352 Gumpoldskirchen (AT)
(72) Erfinder: Demuth, Martin, 2352 Gumpoldskirchen (AT)
(74) Vertreter: Münzel, Joachim R.

(56) Entgegenhaltungen:
- WO-A1-99/06778
- DD-A1- 123 307
- DE-B4-102008 029 512
- JP-A- 2007 126 328

## Beschreibung

Die Erfindung betrifft ein Verfahren zum Herstellen von Zementklinker, bei dem Zementrohmehl in wenigstens einem Zyklonvorwärmer erhitzt wird, das erhitzte Rohmehl in einem mit einem Brenner ausgerüsteten Kalzinator entsäuert und in einem Klinkerofen zu Klinker gebrannt wird, und der Klinker anschließend in einem Klinkerkühler gekühlt wird, wobei zur Stoffumwandlung erforderliche Energie durch Verbrennen eines primären Brennstoffs mit einem primären und/oder sekundären Oxidationsmittel an einem Brenner im Klinkerofen und durch Verbrennen eines sekundären Brennstoffs mit einem tertiären Oxidationsmittel am Brenner des Kalzinators zugeführt wird.

Bei der Herstellung von Zementklinker im Trockenprozess wird ein mineralisches, Calciumcarbonat (CaCO₃) enthaltendes Ausgangsmaterial, im Folgenden "Zementrohmehl" genannt, in einem ein- oder mehrstufigen Zyklonvorwärmer erhitzt und restgetrocknet. In einem Kalzinator wird das Calciumcarbonat anschließend bei einer Temperatur von 800°C bis 900°C weitgehend unter Bildung von Calciumoxid (CaO) und Kohlendioxid (CO₂) gespalten ("entsäuert"). Das heiße Rohmehl wird anschließend in einem meist als Drehrohrofen ausgebildeten Klinkerofen bei einer Temperatur von 1000°C bis 1500°C restentsäuert und durch einen Sinterungsprozess zu Klinker gebrannt. Der Klinker wird anschließend in einem Klinkerkühler in einem Luftstrom auf eine Temperatur von ca. 100°C bis 300°C abgekühlt und in nachfolgenden Prozessschritten zu Zement weiterverarbeitet.

Die für die Stoffumwandlung erforderliche Energie wird dem Prozess durch Verbrennen eines primären Brennstoffs im Klinkerofen und durch Verbrennen eines sekundären Brennstoffs in einem dem Kalzinator zugeordneten Brennofen zugeführt. Während der Klinkerofen aufgrund der hohen erforderlichen Temperaturen üblicherweise mit hochwertigen Brennstoffen beheizt wird, werden im Brennofen des Kalzinators häufig niederkalorische Ersatzbrennstoffe eingesetzt. Die zur Verbrennung der Brennstoffe erforderlichen Oxidatoren werden als primäre, sekundäre und tertiäre Oxidationsmittel bezeichnet.

Im Folgenden soll mit dem Begriff "primäres Oxidationsmittel" ein Oxidationsmittel bezeichnet werden, das über Zuführungskanäle des Klinkerofenbrenners und/oder über den Austragsbereich des Aufgabeguts in den Brennraum des Klinkerofens eingetragen wird. Als "sekundäres Oxidationsmittel" sollen alle weiteren, zusätzlich zum primären Oxidationsmittel in den Klinkerofen eingetragene Oxidationsmittel bezeichnet werden. Beispielsweise wird in vielen Fällen Luft, die zuvor als Kühlmedium im Klinkerkühler eingesetzt wurde, anschließend ganz oder teilweise als Sekundärluft dem Klinkerofen zugeführt. Ein anderes Beispiel für ein sekundäres Oxidationsmittel ist aus der DE 10 2008 029 512 B4 bekannt. Dort kommt als sekundäres Oxidationsmittel Sauerstoff oder sauerstoffreiches Gas zum Einsatz, das über Lanzen in den Klinkerofen eingetragen wird und insbesondere die Zugabe niederkalorischer Brennstoffe auch in den Brenner des Klinkerofens ermöglicht. Als "tertiäres Oxidationsmittel" (auch "Tertiärluft" genannt) wird hier ein Oxidationsmittel verstanden, das zur Verbrennung von sekundärem Brennstoff in den Kalzinator eingesetzt wird. Das Tertiäre Oxidationsmittel kann dem Kalzinator an verschiedenen Stellen zugeführt werden; insbesondere wird es ganz oder teilweise einem im Folgenden auch als "Kalzinierofen" bezeichneten Brennofen zugeführt, in welchem der sekundäre Brennstoff an einem Brenner (im Folgenden auch als "Kalzinatorbrenner" bezeichnet) in den Kalzinierofen eingetragen und verbrannt wird. Als tertiäres Oxidationsmittel wird in vielen Fällen Kühlluft aus dem Klinkerkühler eingesetzt, wie dies beispielsweise in der DE 10 2006 012 267 A1, der WO 83/03601 A1 oder der EP 0 162 215 B1 beschrieben wird.

Die im Klinkerofen entstehenden Abgase werden durch eine Einlaufkammer des Klinkerofens zum Kalzinator geführt, durchströmen diesen und werden zusammen mit den bei der Verbrennung des Sekundärbrennstoffs im Kalzinator entstehenden Abgasen in den Zyklonvorwärmer eingeleitet, durchlaufen diesen im Gegenstrom zum Rohmehl und werden anschließend abgeführt. Nach dem Wärmetausch mit dem Rohmehl im Zyklonvorwärmer weisen die Abgase noch Temperaturen von 300°C bis 400°C auf.

Bei der Verbrennung des niederkalorischen Ersatzbrennstoffs im Brennofen des Kalzinators entsteht in nicht geringem Umfang Kohlenmonoxid (CO).Teilweise kann dieses Kohlenmonoxid dazu genutzt werden, Stickoxide (NOₓ) im Abgas des Kalzinators zu zerstören; da dabei jedoch nur eine vergleichsweise geringe Menge an Kohlenmonoxid benötigt wird, wird eine erhebliche Menge des Umweltschadstoffes Kohlenmonoxid mit dem Abgas in die Umgebungsatmosphäre abgegeben.

Zur Verminderung des Schadstoffausstoßes, insbesondere zur Verminderung des Gehalts von CO und NOₓ im Abgas, kommt beim Gegenstand der DE 10 2009 055 942 A1 eine regenerative thermische Nachverbrennungsanlage zum Einsatz, in der bei einer Temperatur von mehr als 800°C in einer mehrstufigen Brennkammer Kohlenmonoxid oxidiert und Stickoxide unter Zuführung einer Stickstoff-WasserstoffVerbindung thermisch reduziert werden. Dieser Lösungsvorschlag ist zwar effektiv, jedoch mit außerordentlich hohen apparativen Kosten verknüpft.

Weiterhin ist aus der WO 99/06778 A1 ein Verfahren zur Herstellung von Zementklinker bekannt, das in einer Vorrichtung erfolgt, die einen Vorwärmer, einen Kalzinator, einen Drehrohrofen und einen Klinkerkühler umfasst, wobei in den Kalzinator geführte Tertiärluft mit Sauerstoff aus einer Sauerstoffquelle angereichert wird.

Aufgabe der vorliegenden Erfindung ist es, den Ausstoß an Kohlenmonoxid am Kalzinator mit einem vergleichsweise geringen apparativen Aufwand zu reduzieren.

Gelöst ist diese Aufgabe durch ein Verfahren mit den Merkmalen des Patentanspruchs 1. Vorteilhafte Ausgestaltungen der Erfindung sind in den Unteransprüchen angegeben.

Gemäß dem erfindungsgemäßen Verfahren wird in den Kalzinator also zusätzlich zum tertiären Oxidationsmittel Sauerstoff eingetragen, wobei die Zuführung dieses zusätzlichen Sauerstoffs im Bereich des Kalzinatorbrenners erfolgt. Die Menge des zuzuführenden tertiären Oxidationsmittels wird dabei trotz der zusätzlichen Sauerstoffmenge in der Regel nicht reduziert, da die Menge des zusätzlichen Sauerstoffs gering gegenüber der Tertiärluftmenge ist und beispielsweise nur 0,5% bis 2% von dessen Volumenstrom beträgt. Durch die Zugabe selbst einer derart geringen Menge an Sauerstoff wird die Effizienz der Verbrennung der niederkalorischen Brennstoffe im Kalzinatorbrenner wesentlich gesteigert; gleichzeitig wird die Bildung von Kohlenmonoxid reduziert, jedoch nicht vollständig unterbunden. Es hat sich gezeigt, dass das dennoch entstehende Kohlendioxid ausreicht, um die gewünschte Reduzierung der Stickoxide zu bewirken.

Als "Sauerstoff" wird hier ein Gas mit einem Sauerstoffanteil von über 90 Vol.-%, bevorzugt über 95 Vol.-%, besonders bevorzugt über 99 Vol.-% betrachtet. Als sekundärer Brennstoff kommen insbesondere niederkalorische Ersatzbrennstoffe zum Einsatz, wie beispielsweise Klärschlamm, Schredderabfälle, Schredderleichtfraktion, Lösemittelreste oder biogene Rohstoffe, wie beispielsweise Holz.

Um das Anbrennen des Brennstoffs zu beschleunigen, wird der Sauerstoff vorzugsweise in Form eines Sauerstoffstrahls zugeführt, der in eine vom Brenner des Kalzinators ausgehende Flamme gerichtet wird. Der Sauerstoffstrahl wird beispielsweise mittels einer Sauerstofflanze erzeugt, die entweder als eine vom Brenner separate Eintragsvorrichtung ausgestaltet oder im Brenner selbst montiert ist, beispielsweise in Form einer innerhalb einer Brennstoffzuführung des Kalzinatorbrenners angeordneten Lanze oder eines Ringkanals, der sich im Brennergehäuse radial außenseitig an der Brennstoffzuführung oder an einer gegebenenfalls vorhandenen Tertiärluftzuführung anschließt. Der Sauerstoff kann vor seiner Zuführung in den Kalzinator auch vorgewärmt werden. Weiterhin kann eine geeignete Regelarmatur vorgesehen sein, mittels der die Zuführung des zusätzlichen Sauerstoffs beispielsweise in Abhängigkeit vom CO-Gehalt des Abgases geregelt wird, um die dauerhafte Unterschreitung eines Abgasgrenzwerts während des Betriebs zu gewährleisten.

Eine vorteilhafte Ausgestaltung der Erfindung sieht vor, dass der Sauerstoff mit Schall- oder Überschallgeschwindigkeit zugeführt wird. Die sehr hohe Geschwindigkeit beim Eintrag des sekundären Oxidationsmittels führt dazu, dass das sekundäre Oxidationsmittel tief in die Flamme eindringt. Jedoch schließt die Erfindung nicht aus, dass der Sauerstoff mit Unterschall eingetragen wird.

Eine abermals bevorzugte Ausgestaltung der Erfindung sieht vor, dass der Sauerstoff dem Kalzinator in Form von Gaspulsen zugeführt wird. Dabei kann vorteilhafterweise durch eine Variation der Pulsdauern die zugeführte Sauerstoffmenge variiert und den jeweiligen Anforderungen angepasst werden.

Die Menge des dem Kalzinator zusätzlich zur Tertiärluft zugeführten Sauerstoffs beträgt erfindungsgemäß zwischen 0,5% und 2 % des tertiären Oxidationsmittels und verändert damit die Menge des Kalzinatorabgases kaum. Bereits diese geringfügige Menge an zusätzlichem Sauerstoff reduziert den Kohlenmonoxidgehalt im Abgas deutlich, auf beispielsweise etwa 10% bis 40% der ohne Sauerstoffzuführung erzeugten Menge. Ein größere Menge an zusätzlichem Sauerstoff ist weniger bevorzugt, da dadurch zwar der Gehalt an Kohlenmonoxid weiter reduziert werden kann, jedoch eine gewisse Menge an Kohlenmonoxid im Abgas benötigt wird, um Stickoxide zu reduzieren.

Eine selbst nicht zur Erfindung gehörende Vorrichtung zur Herstellung von Zement ist mit einem Kalzinator, der eine Brennstoffzuführung oder mehrere Brennstoffzuführungen für einen sekundären Brennstoff oder mehrere sekundäre Brennstoffe und eine Zuführung oder mehrere Zuführungen für tertiäres Oxidationsmittel aufweist, einem Klinkerofen und einem Klinkerkühler ausgerüstet, wobei der Klinkerofen eine Brennstoffzuführung für einen primären Brennstoff und Zuführungen für primäres und/oder sekundäres Oxidationsmittel aufweist, und wobei die Vorrichtung dadurch gekennzeichnet ist, dass dem Kalzinator zusätzlich zur Zuführung für das tertiäre Oxidationsmittel eine mit einer Quelle für Sauerstoff strömungsverbundene Sauerstoffzuführung zugeordnet ist.

Die beschriebene, nicht erfindungsgemäße Vorrichtung ermöglicht neben der Zuführung von Tertiärluft in den Kalzinator die zusätzliche Zuführung von Sauerstoff, um die Verbrennung des sekundären Brennstoffs (oder der sekundären Brennstoffe) zu beschleunigen und dadurch die Bildung von Kohlenmonoxid zu reduzieren. Sofern das häufig in Form von Strähnen im Kalzinator vorliegende Kohlenmonoxid mit dem eingetragenen Sauerstoff unmittelbar in Kontakt gerät, kann zudem eine direkte Nachverbrennung des Kohlenmonoxids erfolgen.

Zweckmäßigerweise umfasst die Sauerstoffzuführung eine auf die Flamme des Kalzinatorbrenners gerichtete Sauerstofflanze. Die mit einer Sauerstoffquelle, beispielsweise einem Sauerstofftank, strömungsverbundene Sauerstofflanze mündet entweder direkt in einen Verbrennungsraum des Kalzinators ein, und zwar derart, dass ein von ihr ausgehender Sauerstoffstrahl innerhalb des Verbrennungsraums auf die vom Kalzinatorbrenner ausgehende Flamme trifft, oder die Lanze ist durch das Brennergehäuse hindurchgeführt, beispielsweise innerhalb einer Brennstoffzuführung des Kalzinatorbrenners angeordnet. Die Sauerstofflanze ist in bevorzugten Ausführungsformen der Erfindung mit einer Lavaldüse ausgerüstet, um einen Eintrag mit Überschallgeschwindigkeit zu ermöglichen, und/oder mit Armaturen, die einen Eintrag des Sauerstoffs in Form von Gaspulsen gestatten. Weiterhin kann die Sauerstofflanze auch als Dralllanze und/oder die Sauerstoffzuführung mit einer Einrichtung zum Vorwärmen ausgerüstet sein. Im Rahmen der Erfindung ist es selbstverständlich auch möglich, mehrere Sauerstofflanzen der vorgenannten Typen an einem Kalzinator einzusetzen.

In eine gleichfalls bevorzugten Variante umfasst die Sauerstoffzuführung, ergänzend oder anstatt der zuvor genannten Sauerstofflanzen, einen mit einer Sauerstoffquelle, beispielsweise einem Sauerstofftank, strömungsverbundenen Ringspalt im Brenner des Kalzinators. Der Ringspalt ist dabei bevorzugt radial außenseitig an einer Brennstoffzuleitung oder an einer im Brenner vorgesehenen Tertiärluftzuleitung angeordnet.

Alternativ oder ergänzend zu den vorgenannten Ausführungsformen ist die Sauerstoffzuführung mit der Zuführung oder einer Zuführung für das tertiäre Oxidationsmittel in den Kalzinator strömungsverbunden. In dieser Ausgestaltung gelangt also zumindest ein Teil des zusätzlichen Sauerstoffs zusammen mit der Tertiärluft in den Kalzinator.

### Beispiel 1:

In einem Kalzinator wird ein niederkalorischer Brennstoff mit z.B. aus dem Klinkerkühler stammender Tertiärluft verbrannt. Der Gehalt an Kohlenmonoxid im Abgas des Kalzinators betrage, ohne Zuführung zusätzlichen Sauerstoffs, 0,5 Vol.-% bei einer Gesamtabgasmenge von 100000 Nm³/h. Mittels einer auf die Flamme des Kalzinatorbrenners gerichteten oder innerhalb der Brennstoffzuführung des Kalzinatorbrenners angeordneten Lanze wird Sauerstoff mit einer Reinheit von mindestens 95 Vol.-% in den Kalzinator eingetragen. Die Sauerstoffmenge beträgt zwischen 500 und 1000 Nm³/h. Durch den Sauerstoffeintrag wird eine Reduktion des CO-Gehalts im Abgas auf 0,2 Vol.-% und darunter erzielt.

### Beispiel 2:

Durch Verbrennung eines niederkalorischen Brennstoffs mit Tertiärluft im Brenner eines Kalzinators betrage der Gehalt an Kohlenmonoxid im Kalzinatorabgas ohne Zuführung zusätzlichen Sauerstoffs 3 Vol.-% bei einer Gesamtabgasmenge von 100000 Nm³/h. Durch den Eintrag von Sauerstoff mit einer Reinheit von mindestens 95 Vol.-% mittels einer in die vom Kalzinatorbrenner ausgehenden Flamme gerichteten oder innerhalb der Brennstoffzuführung des Kalzinatorbrenners angeordneten Lanze in einer Menge von 500 bis 1000 Nm³/h wird eine Reduktion des CO-Gehalts im Abgas auf bis hinab zu 0,5 Vol.-% erzielt. :

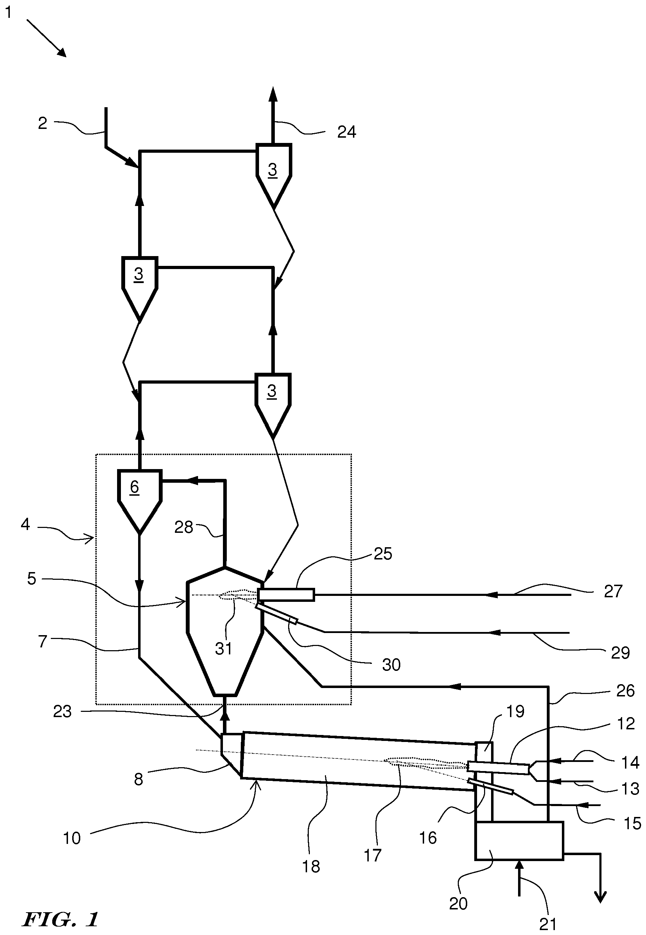

Anhand der Zeichnung soll im Folgenden ein Ausführungsbeispiel der Erfindung näher erläutert werden. Die einzige Zeichnung (Fig. 1) zeigt schematisch eine Vorrichtung zum Herstellen von Zementklinker.

Bei der in der Zeichnung gezeigten Vorrichtung 1 zum Herstellen von Zementklinker wird das zu brennende Rohmehl über eine Zuleitung 2 einem System von Zyklon-Wärmetauschern 3 zugeführt. Anschließend durchläuft es einen Kalzinator 4, welcher einen zur Kalzinierung des Rohmaterials bestimmten Kalzinierofen 5 sowie eine gleichfalls als Zyklon ausgebildete Abscheideeinrichtung 6 umfasst. Im Kalzinator 4 wird das Rohmehl bei Temperaturen von ca. 800°C bis 900°C unter Freisetzung von Kohlendioxid entsäuert und anschließend durch über eine Zuführungsleitung 7 dem Einlauf 8 eines Klinkerofens 10 zugeführt.

Der als Drehrohrofen ausgebildete Klinkerofen 10 ist mit einem Brenner 12 ausgerüstet, der über eine Primärbrennstoffzuführung 13 und über eine Primärluftzuführung 14 mit Primärbrennstoff und Primärluft beschickt wird. Gegebenenfalls wird dem Klinkerofen 10 über eine an eine Zuleitung 15 angeschlossene Lanze 16 ein sekundäres Oxidationsmittel, beispielsweise Sauerstoff, zugeführt. Die im Klinkerofen 10 ausmündende Lanze 16 ist derart positioniert, dass ein von ihr ausgehender Sauerstoffstrahl in Richtung einer vom Brenner 12 ausgehenden Flamme 17 im Innern des Klinkerofens 10 ausgetragen wird. Bei Temperaturen von 1200°C bis 1500°C wird der bereits weitgehend kalzinierte Rohstoff in einer Sinterzone 18 des Klinkerofens 10 gesintert und verlässt den Klinkerofen 10 an dessen Ofenkopf 19 als fertiggebrannter heißer Klinker, welcher dann im Klinkerkühler 20 auf Temperaturen von 100°C bis 300°C abgekühlt wird, woraufhin dessen nicht mehr dargestellte Aufarbeitung zu Zement erfolgt. Die Kühlung des Klinkers im Klinkerkühler 20 erfolgt mittels Frischluft, die über eine mit hier nicht gezeigten Gebläsen ausgerüstete Kühlluftzuführung 21 in den Klinkerkühler 20 eingebracht wird.

Die beim Verbrennen des Primärbrennstoffes im Brenner 12 des Klinkerofens 10 entstehenden heißen Ofenabgase werden, nachdem sie die Sinterung des Rohmehls in der Sinterzone 18 des Klinkerofens 10 herbeigeführt haben, über eine Ofengasleitung 23 dem Kalzinatorofen 5 zugeführt. Die Abgase des Klinkerofens 10 und des Kalzinierofens 5 durchlaufen das System der Zyklon-Wärmetauscher 3 im Gegenstrom zum Rohmehl und werden an einer Abgasleitung 24, in der ein hier nicht gezeigtes Absauggebläse integriert ist, abgeführt und anschließend gereinigt.

Zumindest ein Teil der heißen Abluft aus dem Klinkerkühler 20 wird als sogenannte Tertiärluft über eine Tertiärluftleitung 26 dem Kalzinierofen 5 zugeführt und dort zur Verbrennung von sekundärem Brennstoff eingesetzt, der über eine Brennstoffzuleitung 27 gegebenenfalls unter Zuhilfenahme von Förderluft einem Brenner 25 des Kalzinierofens 5 zugeführt wird. Die Tertiärluftleitung 26 kann im Übrigen auch in hier nicht gezeigter Weise in mehrere Zuleitungen übergehen, mit denen Tertiärluft in verschiedene Bereiche des Kalzinators 4 eingeleitet werden kann, wie dies beispielsweise in der DE 10 2006 012 267 A1 beschrieben wird.

Beim sekundären Brennstoff handelt es sich in der Regel um einen niederkalorischen Brennstoff, insbesondere um feste, flüssige oder gasförmige Abfallstoffe, wie beispielsweise Plastikschnitzel, Schredderleichtfraktion oder Klärschlamm. Da diese niederkalorischen Brennstoffe in der zugeführten Tertiärluft nur langsam und unvollständig verbrannt werden, kommt es in erheblichem Maße zur Bildung von Kohlenmonoxid, das zusammen mit den übrigen Abgasen des Kalzinierofens 5 über Leitung 28 abgeführt wird. Der Brenner 25 kann auch mehrere separate Zuführungen für verschiedene Brennstoffe aufweisen, beispielsweise getrennte Zuführungen für feste, flüssige und/oder gasförmige Brennstoffe.

Um die Belastung des Kalzinatorabgases mit Kohlenmonoxid zu begrenzen, wird im brennernahen Bereich des Kalzinierofens 5 zusätzlich zur Tertiärluft Sauerstoff eingetragen. Die Zuführung dieses zusätzlichen Sauerstoffs erfolgt möglichst direkt in eine vom Brenner 25 des Kalzinierofens 5 ausgehende Flamme 31 hinein. Im gezeigten Ausführungsbeispiel wird der zusätzliche Sauerstoff über eine Sauerstoffzuleitung 29 herangeführt, die an einen hier nicht gezeigten Sauerstofftank angeschlossen und mit einer in das Innere des Klinkerofens 10 ausmündenden Sauerstofflanze 30 strömungsverbunden ist. Die Sauerstofflanze 30 ist so ausgerichtet, dass ein von ihr ausgetragener Sauerstoffstrahl direkt in die Flamme 31 eindringt. Die Menge des zugeführten zusätzlichen Sauerstoffs ist vergleichsweise gering und beträgt lediglich 0,5% bis 2% der Tertiärluftmenge. Durch die Zufuhr des zusätzlichen Sauerstoffs verkürzt sich die Verbrennungszone im Innern des Kalzinierofens 5, und der über die Brennstoffzuleitung 27 herangeführte Brennstoff wird früher gezündet, als dies ohne zusätzlichen Sauerstoffeintrag der Fall wäre. Insbesondere beim Einsatz niederkalorischer Brennstoffe wird der Verbrennungsprozess dadurch wesentlich beschleunigt, da selbst feuchte Ersatzbrennstoffe gut zünden und der Ausbrand verbessert wird. Zugleich wird die Entstehung von Kohlenmonoxid deutlich reduziert, jedoch nicht völlig unterbunden.

Ergänzend oder anstelle der auf die Brennerflamme 31 gerichteten Sauerstofflanze 30 oder einer Mehrzahl solcher Lanzen können auch (hier nicht gezeigt) andere Eintragseinrichtungen für dir Zuführung des zusätzlichen Sauerstoffs vorgesehen sein, beispielsweise eine Sauerstofflanze, die innerhalb des Brennergehäuses, beispielsweise in einer Brennstoffzuführung des Brenners 25 angeordnet ist, oder es kann eine Strömungsverbindung von der Sauerstoffzuleitung 29 zur Tertiärluftzuleitung vorgesehen sein, mittels der die die dem Brenner 25 zugeführte Tertiärluft mit Sauerstoff angereichert wird. Die Injektion des zusätzlichen Sauerstoffs an Lanze 30 und/oder anderen Eintragseinrichtungen kann dabei mit Schall-, Unterschall- oder Überschallgeschwindigkeit und/oder in Form von zeitlich voneinander beabstandeten Gaspulsen und/oder unter Zuhilfenahme einer Verdrallungseinrichtung erfolgen.

### Bezugszeichenliste

- 1: Vorrichtung
- 2: Zuleitung
- 3: Zyklon-Wärmetauscher
- 4: Kalzinator
- 5: Kalzinierofen
- 6: Abscheideeinrichtung
- 7: Zuführungsleitung
- 8: Einlauf des Klinkerofens
- 9: -
- 10: Klinkerofen
- 11: -
- 12: Brenner
- 13: Primärbrennstoffzuführung
- 14: Primärluftzuführung
- 15: Zuleitung (für sekundäres Oxidationsmittel)
- 16: Sauerstofflanze
- 17: Flamme
- 18: Sinterzone
- 19: Ofenkopf
- 20: Klinkerkühler
- 21: Kühlluftzuführung
- 22: -
- 23: Ofengasleitung
- 24: Abgasleitung
- 25: Brenner
- 26: Tertiärluftzuleitung
- 27: Brennstoffzuleitung
- 28: Leitung
- 29: Sauerstoffzuleitung
- 30: Lanze
- 31: Flamme

## Patentansprüche

1. Verfahren zum Herstellen von Zementklinker, bei dem Zementrohmehl in wenigstens einem Zyklonvorwärmer (3) erhitzt, das erhitzte Rohmehl in einem mit einem Brenner (25) ausgerüsteten Kalzinator (4) entsäuert und in einem Klinkerofen (10) zu Klinker gebrannt wird und der Klinker anschließend in einem Klinkerkühler (20) gekühlt wird, wobei zur Stoffumwandlung erforderliche Energie durch Verbrennen eines primären Brennstoffs mit einem primären und gegebenenfalls einem sekundären Oxidationsmittel an einem Brenner (12) im Klinkerofen (10) und durch Verbrennen eines sekundären Brennstoffs mit einem tertiären Oxidationsmittel im Kalzinator (4) zugeführt wird,
wobei in den Kalzinator (4), zusätzlich zum tertiären Oxidationsmittel, im Bereich des Kalzinatorbrenners (25) Sauerstoff in einer Reinheit von über 90 Vol.-% eingetragen wird,
**dadurch gekennzeichnet,**
**dass** die Menge des in den Kalzinator (4) zusätzlich zur Tertiärluft eingetragenen Sauerstoffs zwischen 0,5% und 2 % der Menge des durch die Verbrennung des sekundären Brennstoffs mit dem tertiären Oxidationsmittel erzeugten Kalzinatorabgases beträgt.

2. Verfahren nach Anspruch 1, **dadurch gekennzeichnet, dass** zur Eintragung des Sauerstoffs ein Sauerstoffstrahl erzeugt wird, der in eine vom Kalzinatorbrenner (25) ausgehende Flamme gerichtet wird.

3. Verfahren nach Anspruch 1 oder 2, **dadurch gekennzeichnet, dass** der zusätzliche Sauerstoff mit Schall- oder Überschallgeschwindigkeit eingetragen wird.

4. Verfahren nach einem der vorhergehenden Ansprüche, **dadurch gekennzeichnet, dass** der zusätzliche Sauerstoff in Form von aufeinanderfolgenden Gaspulsen eingetragen wird.

## Claims

1. Process for producing cement clinker, in which cement raw meal is heated in at least one cyclone preheater (3), the heated raw meal is deacidified in a calciner (4) equipped with a burner (25) and burnt in a clinker furnace (10) to give clinker and the clinker is subsequently cooled in a clinker cooler (20), where energy required for the transformation of material is supplied by combustion of a primary fuel with a primary and optionally and a secondary oxidant at a burner (12) in the clinker furnace (10) and by combustion of a secondary fuel with a tertiary oxidant in the calciner (4),
where oxygen having a purity of more than 90% by volume is introduced in addition to the tertiary oxidant into the calciner (4) in the region of the calciner burner (25),
**characterized in that**
the amount of the oxygen introduced in addition to tertiary air into the calciner (4) is from 0.5% to 2% of the amount of the calciner exhaust gas produced by combustion of the secondary fuel with the tertiary oxidant.

2. Process according to Claim 1, **characterized in that**, in order to introduce the oxygen, an oxygen jet which is directed into a flame going out from the calciner burner (25) is produced.

3. Process according to Claim 1 or 2, **characterized in that** the additional oxygen is introduced at the speed of sound or supersonic speed.

4. Process according to any of the preceding claims, **characterized in that** the additional oxygen is introduced in the form of successive gas pulses.

## Revendications

1. Procédé pour la préparation de clinker de ciment, dans lequel de la farine crue de ciment est chauffée dans au moins un préchauffeur à cyclone (3), la farine crue chauffée est désacidifiée dans un calcinateur (4) équipé d'un brûleur (25) et est cuite en clinker dans un four à clinker (10) et le clinker est ensuite refroidi dans un refroidisseur à clinker (20), l'énergie requise pour la transformation de matière étant fournie par la combustion d'un combustible primaire avec un agent d'oxydation primaire et éventuellement un agent d'oxydation secondaire au niveau d'un brûleur (12) dans le four à clinker (10) et par la combustion d'un combustible secondaire avec un agent d'oxydation tertiaire dans le calcinateur (4),
de l'oxygène d'une pureté supérieure à 90 % en volume étant introduit dans le calcinateur (4), dans la zone du brûleur (25) du calcinateur, en plus de l'agent d'oxydation tertiaire,
**caractérisé en ce que**
la quantité d'oxygène introduit dans le calcinateur (4) en plus de l'air tertiaire est comprise entre 0,5 % et 2 % de la quantité du gaz d'échappement du calcinateur produit par la combustion du combustible secondaire avec l'agent d'oxydation tertiaire.

2. Procédé selon la revendication 1, **caractérisé en ce que** pour l'introduction de l'oxygène, un jet d'oxygène est produit qui est dirigé vers une flamme provenant du brûleur (25) du calcinateur.

3. Procédé selon la revendication 1 ou 2, **caractérisé en ce que** l'oxygène supplémentaire est introduit à la vitesse du son ou à vitesse supersonique.

4. Procédé selon l'une quelconque des revendications précédentes, **caractérisé en ce que** l'oxygène supplémentaire est introduit sous forme d'impulsions de gaz successives.
